## Europäisches Patentamt
## European Patent Office
## Office européen des brevets

(19)

(11) Veröffentlichungsnummer: **0 199 313**
**B1**

(12)

# EUROPÄISCHE PATENTSCHRIFT

(45) Veröffentlichungstag der Patentschrift:
28.06.89

(21) Anmeldenummer: 86105418.7

(22) Anmeldetag: 18.04.86

(51) Int. Cl.⁴: **A 01 B   5/14**, A 01 B   7/00,
A 01 B 21/08

(54) Bodenbearbeitungsgerät.

(30) Priorität: 18.04.85 DE 3513945

(43) Veröffentlichungstag der Anmeldung:
29.10.86 Patentblatt 86/44

(45) Bekanntmachung des Hinweises auf die Patenterteilung: 28.06.89 Patentblatt 89/26

(84) Benannte Vertragsstaaten:
DE FR GB IT SE

(56) Entgegenhaltungen:
AU–B–   516 929
DE–A– 3 412 512
DE–C–   944 095

(73) Patentinhaber: Mentzingen, Rudolf, Freiherr von
Schloss Bürg
D-7106 Neuenstadt a.K. (DE)

(72) Erfinder: Mentzingen, Rudolf, Freiherr von
Schloss Bürg
D-7106 Neuenstadt a.K. (DE)

(74) Vertreter: Dr.-Ing. Hans Lichti Dipl.-Ing. Heiner Lichti
Dipl.-Phys. Dr. Jost Lempert
Postfach 41 07 60 Durlacher Strasse 31
D-7500 Karlsruhe 41 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Bodenbearbeitungsgerät zum flachen Wenden des Bodens, bestehend aus einem Rahmen und mehreren von diesem an etwa vertikalen Schwenkachsen aufgenommenen, gewölbten Scheiben, die quer zur Fahrtrichtung mit einem Abstand voneinander, der geringer ist als der Scheibendurchmesser, angeordnet, an jeweils etwa horizontalen Achsen drehbar gelagert und unter einem Winkel zur Fahrtrichtung angestellt sind.

Bodenbearbeitungsgeräte des eingangs genannten Aufbaus sind unter dem Begriff Scheibeneggen in einer Vielzahl von Ausführungsformen bekannt. Sie dienen in erster Linie zum oberflächigen Auflockern von Kulturboden, z. B. Stoppelfeldern, Grasnarben etc. sowie zum Einarbeiten der gelockerten Pflanzen bzw. Ernterückstände in den Boden. In der Regel werden zwei Scheibensätze, innerhalb der die Scheibenachsen fluchten, eingesetzt, wobei die Wölbung der Scheiben bei den beiden Sätzen gegeneinander gerichtet ist. Der vorlaufende Scheibensatz wird unter einem schrägen Winkel zur Fahrtrichtung und der nachlaufende Scheibensatz unter dem Komplementärwinkel gegenüber der Lotrechten zur Fahrtrichtung angeordnet, um die Seitenkräfte zu kompensieren. Häufig werden dabei auch Scheiben mit profiliertem Umfang verwendet. Die Scheiben erfüllen hierbei zwei Zwecke, nämlich einerseits die oberste Bodenschicht durch eine Art Schälbewegung aufzulockern, Ernterückstände und dgl. zu zerkleinern und diese beim Schälvorgang mit dem Boden zu vermischen. Durch die Hintereinanderschaltung zweier Scheibensätze wird der Boden von dem vorlaufenden Scheibensatz in der einen Richtung, von dem nachlaufenden Scheibensatz wieder in die andere Richtung gewälzt. Ein echter Wendevorgang, wie dies beispielsweise beim Pflügen der Fall ist, kann hierbei nicht stattfinden.

Es sind auch Scheibeneggen bekannt (DE-OS 34 12 512), bei der die Scheiben nebeneinander und quer zur Fahrtrichtung an einem Tragbalken angeordnet sind und zum Ausgleich des Seitendrucks ein schräg gestelltes Stützrad vorgesehen ist. Die Scheiben sind mit ihrer Wölbung gleichsinnig orientiert. Um das Gerät als Volldrehgerät einsetzen zu können, ist entweder oberhalb und unterhalb des Tragbalkens je ein Scheibensatz angeordnet und der Tragbalken um eine in Fahrtrichtung liegende Achse um 180° drehbar oder es sind die Scheiben um eine vertikale Achse am Tragbalken drehbar bzw. schwenkbar gelagert, so daß sie aus ihrer einen Position mit einem vorgegebenen Anstellwinkel in eine andere Position mit dem Komplementärwinkel geschwenkt werden können. Der Schwenkwinkel ist dabei begrenzt, da üblicherweise der Scheibenabstand geringer sein muß, als der Scheibendurchmesser so daß die Scheiben bei einem Schwenkwinkel von 180° während des Schwenkvorgang kollidieren würden. Dies bedeutet umgekehrt, daß für die Scheiben ein nennenswerter Anstellwinkel vorgesehen sein muß, um überhaupt ein Schwenken zu ermöglichen.

Die vorgenannten Geräte sind nur als Kultivatoren einsetzbar. Um ein flaches Wenden bis in Tiefen von ca. 15 cm bei einer Arbeitsweise ähnlich einem Pflug zu erreichen, sind ferner Scheiben-Schälpflüge bekannt, bei denen die Scheiben — ähnlich wie die Schare bei einem Pflug — hintereinander versetzt angeordnet sind. Um mit diesen Geräten nicht nur das Beetpflügen zu ermöglichen, können sie auch als Volldrehgerät ausgebildet sein und oberhalb und unterhalb des Wenderahmens je einen Scheibensatz aufweisen, wobei dann allerdings aus Gewichtsgründen sowie aus Gründen der Manövrierbarkeit in der Regel nur drei bis vier Scheiben vorgesehen sind. Damit ist aber die Arbeitsbreite relativ gering, so daß sich solche Schälpflüge in der Praxis kaum durchsetzen konnten. Auch ist es bei Scheibenpflügen bekannt (DE-PS 944 095), die hintereinander angeordneten Scheiben an quer verlaufenden Tragarmen zu lagern und letztere wiederum an dem Längsbalken des Gerätes an einer vertikalen Achse schwenkbar zu lagern, so daß sie aus ihrer winklig angestellten Lage an einer Seite des Längsbalkens in eine entsprechende Position auf der anderen Seite des Längsbalkens verstellt und somit ähnlich einem Volldrehpflug eingesetzt werden können. Auch hierbei ist die Anzahl der Scheiben wegen der Baulänge begrenzt. Schälpflüge mit mehr als vier Scheiben sind zwar schon vorgeschlagen worden, weisen aber eine derart große Baulänge und entsprechend hohes Gewicht auf, daß sie nicht mehr als Aufsattelgerät eingesetzt werden können. Im übrigen erfordern alle Schälpflüge ein zusätzliches Gerät zur Tiefenlockerung und damit einen zusätzlichen Arbeitsgang.

Aus den vorgenannten Gründen ist bis heute das Tiefpflügen mit Volldrehpflügen die einzige Methode, den Boden in einem Arbeitsgang zu wenden und bis in die Tiefe zu lockern. Ebenso sind aber die erheblichen Nachteile, die das Tiefpflügen mit sich bringt, längst geläufig, ohne daß bisher Abhilfe geschaffen werden konnte. So wird einerseits die aktive, humusbildende Schicht beim Wendevorgang nach unten gebracht, also in nicht aktive Bodenzonen verlagert, während anaerobe Bodenschichten von unten nach oben gewendet werden. Dieser an sich unsinnige Umwälzvorgang wird durch Vorschälwerkzeuge, die zumindest einen Teil der aktiven Schicht abnehmen und unmittelbar in die Furche wenden, noch verschlechtert. Ein weiterer Nachteil ergibt sich durch die Verdichtung an der Furchensohle sowie dadurch, daß mehrscharige Wendepflüge ein Gewicht von einigen Tonnen aufweisen können, die über die Schlepperräder zur weiteren Bodenverdichtung beitragen. Mit zunehmender Arbeitsbreite (Anzahl der Schare) steigt auch die Länge des Gerätes und verschlechtert sich somit auch die Manövrierfähigkeit. Schließlich haben solche tiefgehenden Pflüge einen erheblichen Leistungsbedarf. Sie müssen ferner Steinsicherungen etc. aufweisen.

In Erkenntnis dieser Umstände sind neben dem bereits erwähnten Scheibenpflug bzw. Schälpflug noch andere Pflugarten, z. B. Spatenpflug, Kreiselpflug etc., vorgeschlagen worden, die bei relativ geringem Gewicht nur die aktive Bodenschicht wenden. Alle bekannten Geräte dieses Aufbaus besitzen aber, wie eingangs gesagt, eine zu geringe Arbeitsbreite und im Falle des Volldrehgerätes ein zu hohes Gewicht bzw. eine zu große Länge und erfordern eine zusätzliche Tiefenlockerung.

Der Erfindung liegt die Aufgabe zugrunde, ein Bodenbearbeitungsgerät zum flachen Wenden des Boden zu schaffen, das bei größtmöglicher Arbeitsbreite und kurzer Baulänge sowohl das Beetpflügen, als auch das Volldrehpflügen mit geringer Arbeitstiefe erlaubt und ferner in Verbindung mit herkömmlichen Werkzeugen eine Tiefenlockerung ermöglicht und somit eine Alternative für das herkömmliche Tiefpflügen bietet, ohne dessen Nachteile zu übernehmen.

Ausgehend von dem eingangs erwähnten Bodenbearbeitungsgerät, wird diese Aufgabe dadurch gelöst, daß der Rahmen senkrecht zur Fahrtrichtung und die Scheiben fluchtend nebeneinander angeordnet sind und daß die Scheiben aus der Arbeitsstellung einzeln oder in Gruppen so weit voneinander abrückbar sind, daß sie behinderungsfrei um die vertikale Schwenkachse um 180° schwenkbar sind, und danach wieder in die andere Arbeitsstellung aufeinander zubewegbar sind.

Das erfindungsgemäße Wendegerät ist ähnlich einer einreihigen Scheibenegge ausgebildet, deren Scheibensatz sich etwa senkrecht zur Fahrtrichtung erstreckt und zumindest die für den Straßenverkehr maximal zulässige Breite von 3 m und somit eine entsprechend große Arbeitsbreite aufweisen kann. Dabei sind die Scheiben nicht wie bei herkömmlichen Scheibenpflügen hintereinander gestaffelt, so daß die Länge des Gerätes trotz großer Arbeitsbreite im wesentlichen nur die Längenausdehnung eines Werkzeugs bestimmt wird.

Das erfindungsgemäß ausgebildete Bodenbearbeitungsgerät kann in herkömmlicher Weise eine Tiefeneinstellung aufweisen, um nur die aktive Bodenschicht zwischen beispielsweise 5 und 18 cm zu wenden. Damit verbleibt die aktive Bodenschicht an der Oberfläche und kann somit vollständig zur Humusbildung beitragen. Dieses Gerät kann problemlos mit Tiefenlockerungswerkzeugen kombiniert und aufgrund seiner geringen Arbeitslänge mit diesen in einem Arbeitsgang eingesetzt werden, so daß ein vollständiger Ersatz des Tiefpflügens unter Vermeidung sämtlicher Nachteile, die diesem Verfahren anhaften, geschaffen wird. Auch eine Kombination mit anderen landwirtschaftlichen Geräten ist aufgrund der langen Bauweise möglich.

In der Regel muß der Abstand der Scheiben kleiner als deren Durchmesser, meist sogar kleiner als deren Radius sein, so daß ein Verschwenken um die vertikale Achse bei der fluchtenden Anordnung der Scheiben quer zur Fahrtrichtung nicht möglich wäre. Dies gelingt erfindungsgemäß dadurch, daß die scheiben zunächst voneinander abgerückt, dabei oder danach geschwenkt und dann wieder aufeinander zubewegt werden. Mit dieser Ausbildung können die Scheiben aus der in Arbeitsstellung fluchtenden Anordnung herausgerückt werden, so daß die Scheiben einzeln oder gruppenweise auf Lücke sitzen, die so bemessen ist, daß sich die Scheiben ohne Schwierigkeiten um ihre Schwenkachse um 180° schwenken lassen. Anschließend werden die Scheiben zusammengeführt, so daß sämtliche Scheiben um 180° geschwenkt und wiederum unter dem Anstellwinkel gegenüber der Fahrtrichtung angeordnet sind. Mit diesen Maßnahmen entfällt das sonst beim Volldrehpflügen notwendigen Wenden des Gerätes um eine fahrzeugparallele Achse.

Das Abrücken kann dadurch geschehen, daß die Scheiben durch eine lineare Bewegung abrückbar sind. Statt dessen können die Scheiben auch durch eine Drehbewegung, z. B. durch eine gegensinnige Schwenkbewegung um die Schwenkachse in einer Horizontalebene abrückbar sein. Ferner ist es möglich daß die Scheiben dadurch voneinander abrückbar sind, daß sie um eine quer zur Fahrtrichtung verlaufende horizontale Achse in einer Vertikalebene schwenkbar sind.

Üblicherweise sind die Scheiben mit ihrer etwa horizontalen Drehachse an ihrer gewölbten Außenseite gelagert. Bei dieser Ausbildung wird das behinderungsfreie Schwenken der Scheiben gemäß der Erfindung vorzugsweise dadurch begünstigt, daß das Drehlager jeder Scheibe über einen abgekröpften Arm mit der etwa vertikalen Schwenkachse verbunden ist, wobei vorzugsweise die Scheiben mit Abstand von der Schwenkachse auf der Seite des abgekröpften Arms angeordnet sind. Die Lagerung der Scheiben an einem abgekröpften Arm gibt bei außenseitigem Angriff des Arms die Möglichkeit, Scheiben, deren Abstand voneinander kleiner als der Radius ist, auch dadurch zu wenden, daß die Scheiben mit zeitlicher Verzögerung nacheinander, beginnend mit der am weitesten außen liegenden und mit ihrer Wölbung nach außen offenen Scheibe um ihre Schwenkachse schwenkbar sind. Hiermit ist eine konstruktiv besonders einfache Lösung der Erfindungsaufgabe gegeben, die lediglich entsprechend ausgelegte und an den Schwenkachsen verzögert angreifende Antriebe erfordert.

Durch Kombination der verschiedenen Abrückbewegungen können die notwendigen Abrückwege minimiert und die Zeit für das Umstellen der Scheiben verkürzt werden. Durch die erfindungsgemäße Ausbildung kann insbesondere die Wölbung der Scheiben für den Schwenkvorgang ausgenutzt werden. Dabei kann der Abstand der Scheiben auf das konstruktiv mögliche und für die Bodenbearbeitung optimale Maß, insbesondere auch auf weniger als den Scheibenradius verringert werden.

Gemäß einem vorteilhaften Ausführungsbeispiel sind die Scheiben in wenigstens zwei Gruppen aufgeteilt und abwechselnd der einen und der anderen Gruppe zugeordnet. Das vorgenannte Prinzip des Abrückens läßt sich dann auf verschiedene Art und Weise verwirklichen. So kann beispielsweise die eine Scheibengruppe dadurch abrückbar sein, daß sie um eine quer zur Fahrtrichtung verlaufende horizontale Achse schwenkbar ist. Die Schwenkbewegung muß so weit reichen, daß die Scheiben der beiden Gruppen sich nicht mehr überdecken. In dieser Position können dann die Scheiben um die senkrecht zu der Drehachse der Scheiben stehende Achse geschwenkt und nachher die gesamte Gruppe wiederum um die horizontale Querachse zurückgeschwenkt werden, bis sämtliche Scheiben wieder fluchten. Bei drei oder mehr Gruppen werden wenigstens zwei Gruppen um eine horizontale Querachse mit gegebenenfalls verschiedenen Schwenkwinkeln ausgeschwenkt, um das Drehen der Scheiben behinderungsfrei zu ermöglichen. Die in ihrer Ausgangsposition verbleibenden Scheiben können nach Anheben des Gerätes oder Ausheben der Werkzeuge gedreht werden.

Eine Möglichkeit der konstruktiven Verwirklichung dieser Ausführungsform besteht darin, daß der Rahmen quer zur Fahrtrichtung entsprechend der Anzahl der Scheibengruppen längsgeteilt, der eine Rahmenteil mit der einen Scheibengruppe starr angeordnet ist und die anderen Rahmenteile mit den anderen Scheibengruppen um die am ersten Rahmenteil vorgesehene horizontale Achse schwenkbar sind.

Statt dessen können die Scheiben der einen Gruppe um die Schwenkachse der Scheiben in einer Horizontalebene nach der einen, die andere Gruppe gegensinnig nach der anderen Seite des Rahmens und anschließend in Fortsetzung des Drehsinns in die andere Endlage geschwenkt werden.

Gemäß einer anderen Ausführungsform der Erfindung ist der Rahmen quer zur Fahrtrichtung längsgeteilt und das eine Rahmenteil mit der einen Scheibengruppe von dem anderen Rahmenteil mit der anderen Scheibengruppe im wesentlichen horizontal abrückbar.

Am Ende des Schlags wird also der eine Rahmenteil in horizontaler Richtung von dem anderen Rahmenteil wegbewegt, anschließend werden die Scheiben um ihre vertikale Achse um 180° geschwenkt und daraufhin das Rahmenteil wieder an das erste Rahmenteil herangefahren. Bei allen vorgenannten Ausführungsformen sind naturgemäß ausreichend stabile Verriegelungen für die ausrückbaren Scheibengruppen in der Arbeitsposition vorgesehen.

Ist der Abstand der Scheiben sehr eng, so kann nach einem weiteren Ausführungsbeispiel vorgesehen sein, daß der Rahmen zweifach längsgeteilt ist, das mittlere Rahmenteil mit der einen Scheibengruppe starr angeordnet ist und die beiden äußeren Rahmenteile mit den anderen Scheibengruppen in entgegengesetzten Richtungen horizontal abrückbar sind.

Gemäß einem weiteren Merkmal der Erfindung ist die Ebene der Scheiben, insbesondere ihre zur Drehachse senkrechte Achse, um die sie sich schwenken lassen, entgegen der Fahrtrichtung geneigt. Dadurch wird der schälenden Bewegung beim Wenden eine schabende Bewegung überlagert. In diesem Fall kann das Gerät zusätzlich zum Furchenziehen oder Häufeln eingesetzt werden.

Die Schwenkbarkeit der einzelnen Scheiben um die zu ihrer Drehachse senkrechte Achse gibt zugleich die Möglichkeit, verschiedene Anstellwinkel der Scheiben gegenüber der Fahrtrichtung zu verwirklichen. In diesem Fall muß der Schwenkantrieb mit entsprechenden Arretierungen bzw. Blockierungen versehen sein. In Verbindung mit der vorgenannten Ausführung läßt sich damit die Arbeitsbreite der einzelnen Scheiben (Furchenbreite, Häufelabstand) variieren.

Vorzugsweise sind die Scheiben jeder Gruppe mittels eines sie verbindenden Endlostriebs um die zu ihrer Drehachse senkrechte Achse schwenkbar, wobei gegebenenfalls für jede Gruppe ein eigener Endlostrieb, z. B. ein Kettentrieb oder dgl., vorgesehen sein kann. Statt dessen kann aber auch ein Linearantrieb in Form von hydraulikbetätigten Zahnsegment-Stangen oder dgl., vorgesehen sein.

Aufgrund des engen Scheibenabstandes muß dafür gesorgt werden, daß der von der einen Scheibe gewendete Boden nicht auf den Rücken der anderen Scheibe angedrückt wird. Es ist deshalb vorgesehen, daß wenigstens ein in beiden Drehrichtungen der Scheibe wirksamer Erdabstreifer an der Außenseite der Scheibe angreift. Mit Vorteil ist zusätzlich wenigstens ein Erdleitblech zumindest im Arbeitsbereich der Scheibe an deren Außenseite mit geringem Abstand von dieser angeordnet Dieses Erdleitblech sorgt dafür, daß der von der einen Scheibe gewendete Boden nicht aufgrund der gleichsinnigen Drehbewegung benachbarter Scheiben zwischen diesen mit hochgenommen wird, sondern aufgrund der Relativbewegung zwischen der wendenden Scheibe und dem seiner Hohlseite zugekehrten Leitblech zurückgehalten wird.

Mit Vorteil ist der Erdabstreifer und/oder das Erdleitblech der Außenkontur der Scheibe angepaßt. Dabei können der Erdabstreifer und/oder das Erdleitblech aus ein oder mehr Scheibensektoren gebildet sein.

In besonders vorteilhafter Ausführung ist das Erdleitblech als der Scheibe konturengleiche Leitscheibe mit etwas geringerem Durchmesser ausgebildet und gegebenenfalls gegensinnig zur Scheibe antreibbar, indem sie beispielsweise antriebsmäßig, z. B. über ein Umkehrgetriebe, mit der Drehachse der Scheibe verbunden ist. Dadurch ist gewährleistet, daß die gewendete Erde am Boden gehalten wird.

In bevorzugter Ausführung sind, wie bereits erwähnt, neben den Scheiben Tiefenlockerungswerkzeuge vorgesehen, die vorzugsweise etwa in der gleichen Vertikalebene, in der die Scheiben liegen, angeordnet sind. Die Tiefenlockerungswerkzeuge können einen Schaft aufweisen, mittels dessen sie höhenverstellbar und zugleich schwenkbar sind. Die schwenkbare Anordnung gibt die Möglichkeit, die Tiefenlockerungswerkzeuge so gegenüber den Scheiben anzustellen, daß sich deren jeweiliger Seitendruck beim Arbeiten aufhebt. Hierdurch wird mit einem einzigen Gerät ein vollwertiger Ersatz für einen Volldrehpflug geschaffen, ohne daß auch nur einer der Nachteile, die das herkömmliche Tiefpflügen mit sich bringen, vorhanden wäre. Da der Schlepper auch nicht mehr wie beim Pflügen in der Furche laufen muß, kann er zur besseren Druckverteilung mit einer Zwillingsbereifung und/oder zusätzlichen Gitterrändern ausgestattet werden.

Zweckmäßigerweise ist zwischen dem Rahmen und seiner fahrzeugseitigen Anhängung bzw. Aufsattelung eine den Zugpunkt verlagernde Stelleinrichtung vorhanden. Durch die quer zur Fahrtrichtung angeordneten Scheiben entstehen beim Arbeiten, insbesondere bei großer Scheibenzahl, entsprechende Seitenkräfte, die durch die Zugpunktverlagerung ausgeglichen werden können. Diese Zugpunktverlagerung kann in einer bei Bodenbearbeitungsgeräten üblichen · Weise geschehen, vorzugsweise auf hydraulischem Weg. Auf diese Zugpunktverlagerung kann verzichtet werden, wenn die Tiefenlockerungswerkzeuge und die Scheiben gegeneinander anstellbar sind.

Nachstehend ist die Erfindung anhand von in der Zeichnung dargestellten Ausführungsbeispielen beschrieben. In der Zeichnung zeigen :

Figur 1 eine schematische Draufsicht auf einen Rahmen des Bodenbearbeitungsgerätes mit aufgereihten Scheiben ;

Figur 2 einen schematischen Vertikalschnitt durch die Lagerung und Aufhängung einer Scheibe ;

Figur 3 eine der Figur 1 entsprechende Ansicht des Rahmens vor dem Schwenken der Scheiben ;

Figur 4 eine den Figuren 1 und 3 entsprechende Draufsicht auf einen Rahmen mit drei Gruppen von Scheiben ;

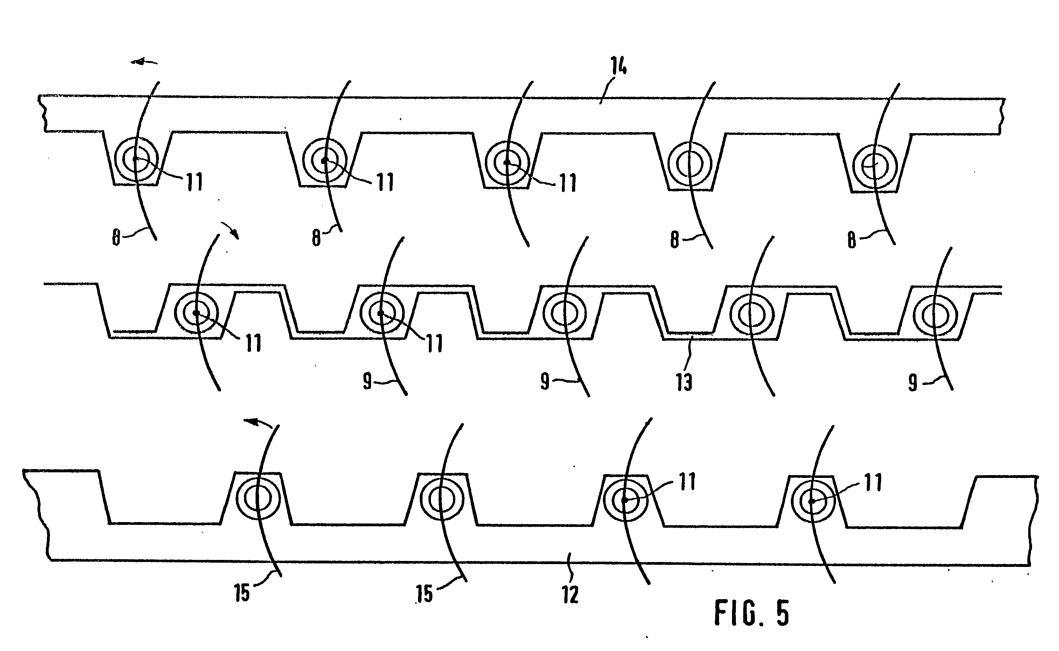

Figur 5 eine der Figur 4 entsprechende Ansicht des Rahmens vor dem Verschwenken der Scheiben ;

Figur 6 eine Seitenansicht einer anderen Ausführungsform des Bodenbearbeitungsgerätes ;

Figur 7 eine Ansicht einer weiteren Ausführungsform ;

Figur 8 eine Draufsicht auf die Darstellung gemäß Figur 7 in einer Zwischenstellung ;

Figur 9 eine Ansicht einer weiteren Ausführungsform ;

Figur 10 eine Ansicht gemäß Figur 9 in einer Zwischenstellung ;

Figur 11 eine Ansicht in der um 180° gewendeten Stellung ;

Figur 12 eine Ausführungsform mit einem starren Erdleitblech ;

Figur 13 eine Ausführungsform mit einem drehenden Erdleitblech ;

Figur 14 eine Ausführungsform mit Tiefenlockerungswerkzeugen in schematischer Draufsicht ;

Figur 15 eine der Figur 14 entsprechende Draufsicht auf eine Scheibe und

Figur 16 einen schematischen Schnitt der Ausführungsform gemäß Figur 15.

In der Zeichnung sind nur die für das Verständnis der Erfindung wesentlichen Teile des Bodenbearbeitungsgerätes schematisch gezeigt, da das Gerät in weiten Teilen in herkömmlicher Weise, z. B. wie bei einer Scheibenegge, ausgebildet sein kann.

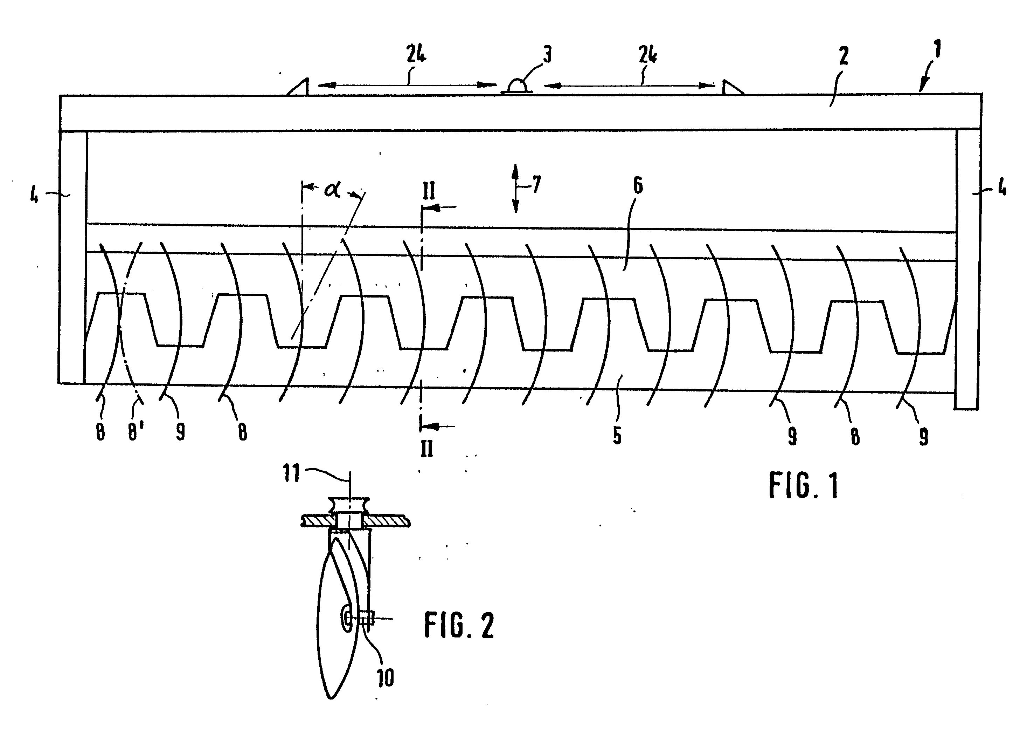

In Figur 1 ist ein insgesamt mit 1 bezeichneter Rahmen erkennbar, der aus einem quer zur Fahrtrichtung verlaufenden Balken 2 mit Anhängekupplung 3 oder entsprechenden Organen zum Aufsatteln versehen ist. Ferner weist der Rahmen in Fahrtrichtung parallele Holme 4 und ein weiteres quer zur Fahrtrichtung verlaufendes Rahmenteil 5 auf. Der Balken 2, die Holme 4 und der Rahmenteil 5 bilden den starren und verwindungssteifen Rahmen 1, der an eine Zugmaschine, z. B. einen Schlepper, angehängt oder am Dreipunktgestänge aufgesattelt wird.

Ferner besitzt der Rahmen 1 ein weiteres Rahmenteil 6, das in den Seitenholmen 4 in Richtung des Doppelpfeils 7 verschiebbar gelagert ist und über ein Eingriffsprofil mit dem Rahmen 5 in Verbindung steht und mit diesem verriegelt ist.

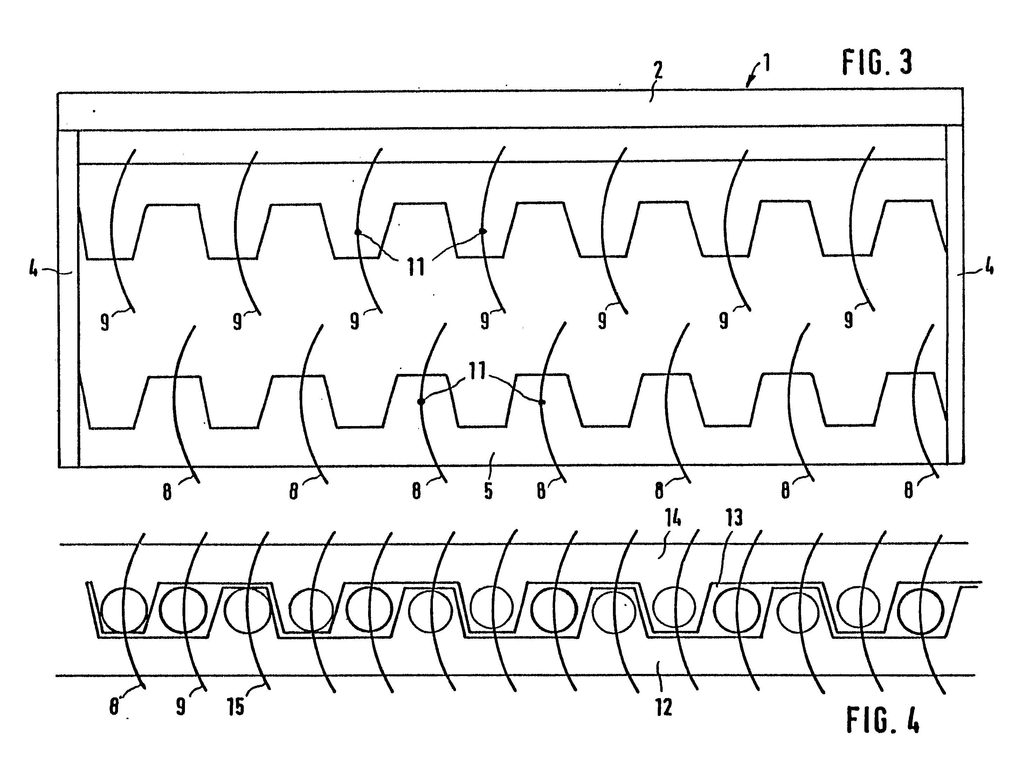

In den Rahmenteilen 5 und 6 sind fluchtend nebeneinander Scheiben 8, 9 angeordnet und an einer Achse 10 (s. Figur 2) drehbar gelagert. In der Zeichnung sind die Scheiben der Einfachheit wegen parallel zur Fahrtrichtung wiedergegeben. In Wirklichkeit sind sie aber unter einem Winkel α gegen die Fahrtrichtung angestellt. (Dies gilt auch für die weiteren Darstellungen).

Ferner ist jede Scheibe um eine zu ihrer Drehachse 10 senkrechte Achse 11, die in der Regel in der Betriebsstellung vertikal steht, (s. Figur 2) um wenigstens 180° schwenkbar, so daß sie nach Anheben des Rahmens in die bei der am weitesten links wiedergegebenen Scheibe 8 angedeutete strichpunktierte Lage 8' geschwenkt werden kann. Schließlich ist jede Achse 11 an einem Antrieb, z. B. einem Endlos-Kettentrieb oder dgl. angeschlossen, so daß die Schwenkbewegung maschinell ausgeführt werden kann. Die Scheiben 8, 9 sind bei dem gezeigten Ausführungsbeispiel gemäß Figur 1 und 3 in zwei Gruppen aufgeteilt, indem die Scheiben 8 am Rahmenteil 5 und die Scheiben 9 am Rahmenteil 6 angeordnet sind. Um die Scheiben 8, 9 schwenken zu können, wird bei dem Ausführungsbeispiel gemäß Figur 1 — gegebenenfalls erst nach Schwenken der Scheiben um die Achse 11 aus der angestellten Lage in die gezeigte Lage parallel zur Fahrtrichtung — das Rahmenteil 6 in den seitlichen Holmen 4 verschoben, so daß die Scheiben voneinander abgerückt sind und die zwischen ihnen vorhandenen Lücken ausreichend Platz bieten, damit die Scheiben um die vertikalen Achsen 11 geschwenkt werden können. Sofern der Abstand der Scheiben auch dann noch zu eng ist, können gegebenenfalls in jeder Gruppe von Scheiben 8 bzw. 9 zunächst nur jede zweite Scheibe geschwenkt werden und zwar gleichzeitig in beiden Gruppen und anschließend die anderen Scheiben (Figur 2).

Bei der Ausführungsform gemäß Figur 4 mit gegebenenfalls noch engerer Scheibenstellung, sind drei Rahmenteile 12, 13 und 14 vorgesehen, von denen beispielsweise das mittlere Rahmenteil 13 starr mit den seitlichen Holmen 4 (Figur 1) verbunden ist, während die beiden äußeren Ramenteile 12 und 14 von diesem abrückbar sind, indem sie wiederum in den Seitenholmen 4 verschiebbar gelagert sind. In diesem Fall sind die Scheiben in drei Gruppen mit den Scheiben 8, 9 und 15 aufgeteilt, von denen jede Gruppe an einem der Rahmenteile 12, 13 und 14 gelagert ist. Auch hier sind die Rahmenteile wiederum mit Eingriffsprofilen versehen, um in der Arbeitsstellung eine starre Verbindung zu schaffen, die zudem eine fluchtende Anordnung der Scheiben ermöglicht.

Gegebenenfalls können die Scheiben einer Gruppe gegenüber den Scheiben der anderen Gruppe oder auch benachbarter Scheiben gegensinnig geschwenkt werden, um mit einem Minimum an Platzbedarf für die Schwenkbewegung auszukommen. Dabei können weiterhin die benachbarten Scheiben oder Scheibengruppen mit einem geringen Nachlauf geschwenkt werden.

Die Ausführungsform gemäß den Figuren 1 und 3 läßt sich auch dahingehend abwandeln, daß beispielsweise das eine Rahmenteil 6 gegenüber dem anderen Rahmenteil 5 um eine horizontale, quer zur Fahrtrichtung verlaufende Achse nach oben schwenkbar ist, bis sich die Scheiben nicht mehr überdecken. In dieser Position können dann die Scheiben 9 um die — dann allerdings nicht mehr vertikal stehende Achse — geschwenkt werden.

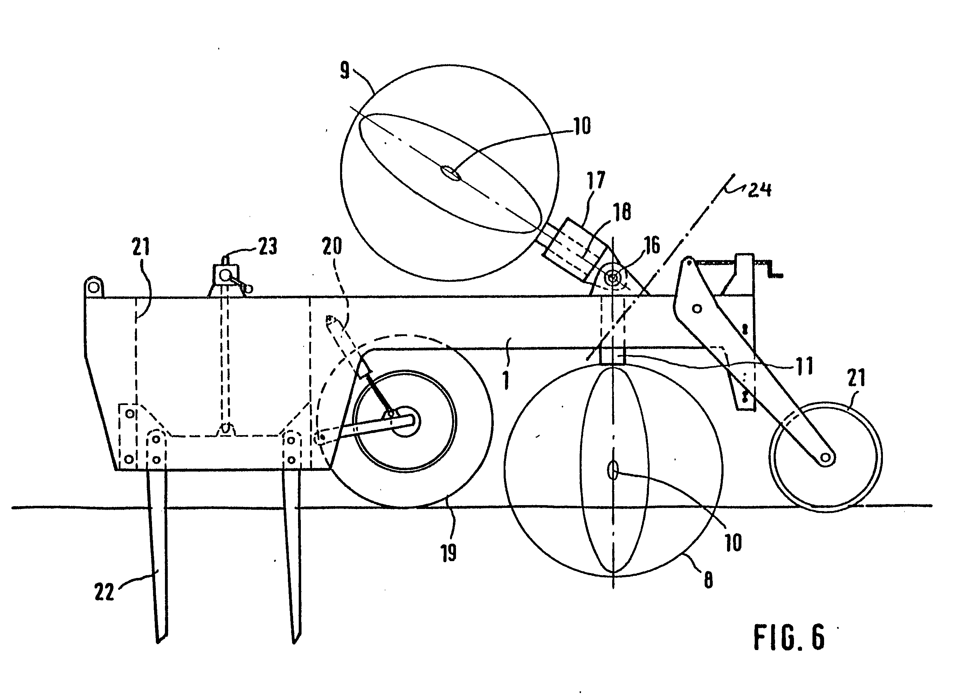

Eine ähnliche Ausführungsform ist in Figur 6 gezeigt. An dem Rahmen 1 ist eine Gruppe von Scheiben 8 ortsfest angeordnet und um eine vertikale Achse 11 schwenkbar, während eine weitere Gruppe 9 von Scheiben auf horizontalen Achsen 16 oder einer gemeinsamen horizontalen Achse sitzen, die rechtwinklig zur Fahrtrichtung verläuft. Um diese Achse 16 können die Scheiben 9 mit ihrer Aufnahme 17, in der sie um eine zu ihrer Drehachse 10 senkrechte Achse 18 drehbar sind, nach oben geschwenkt und in der ausgeschwenkten Lage um die Achse 18 um 180° gedreht werden. Gegebenenfalls können auch zwei Gruppen von Scheiben 9 um eine solche horizontale Querachse nach oben angeschwenkt werden, wobei für die beiden Gruppen mit Vorteil jeweils eine andere Endlage vorgesehen ist, um das Schwenken der Scheiben behinderungsfrei zu ermöglichen.

Der Rahmen 1 gemäß Figur 6 ist über Laufräder 19 am Boden abgestützt. Ferner ist an dem Rahmen 1 ein Nachlaufwerkzeug in Form einer Verdichterwalze 21 angebracht. Das Fahrwerk der Laufräder ist mittels eines Hydraulikzylinders 20 heb- und senkbar, um eine Tiefeneinstellung der Werkzeuge und die Rückverdichtung einstellen zu können.

Schließlich ist bei dem Ausführungsbeispiel gemäß Figur 6 der Rahmen 1 nach vorne verlängert und dort mit einer Aufnahme 21 für Tiefenlockerungswerkzeuge 22 versehen, deren Eindringtiefe über eine Spindel 23, ein nicht gezeigtes Parallelogrammgestänge oder dgl. einstellbar ist.

In Figur 1 ist schematisch angedeutet, wie der Zugpunkt, der beispielsweise mit der Anhängerkupplung 3 zusammenfällt, in Richtung der Doppelpfeile 24 quer zur Fahrtrichtung nach beiden Seiten verlagert werden kann, um den Seitendruck der Scheiben beim Arbeiten kompensieren zu können.

In Figur 6 ist mit strichpunktierter Linie 24 eine Neigung der Schwenkachse 11 gegenüber der Fahrtrichtung angedeutet, die auch für die Achse in der Arbeitsstellung gilt. Dadurch ist die Scheibenebene gegenüber der Fahrtrichtung geneigt, so daß die Scheiben neben der schälenden auch eine schabende Bodenbearbeitung ermöglichen und beispielsweise auch zum Furchenziehen oder Häufeln verwendet werden können.

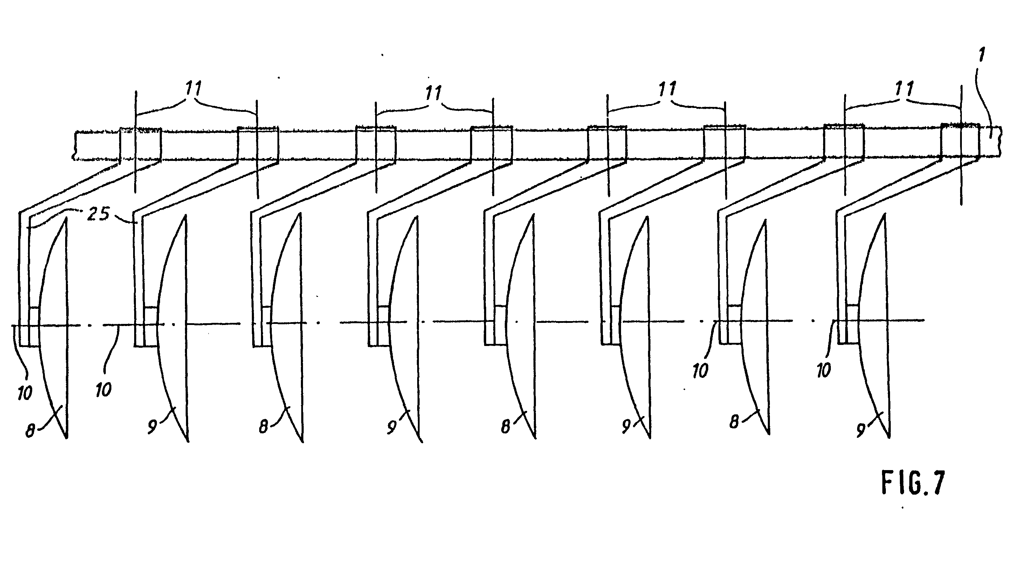

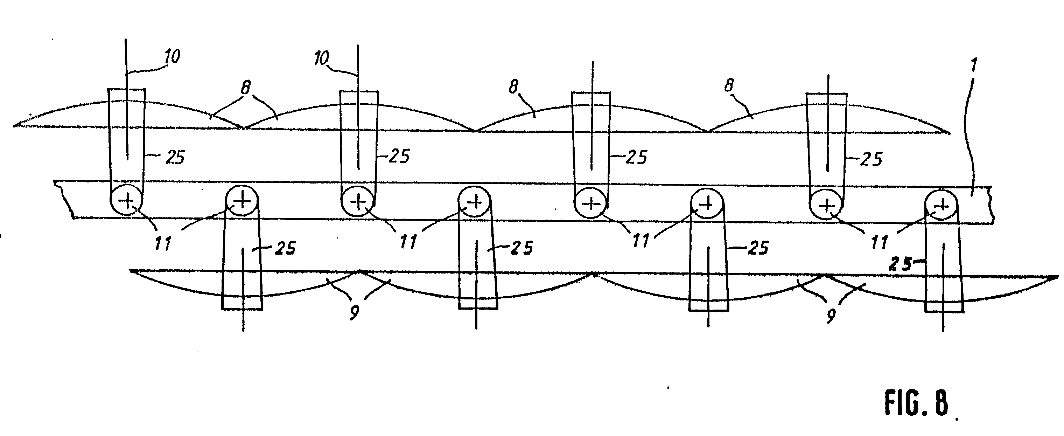

In Figur 7 und 8 ist eine Ausführungsform wiedergegeben, bei der die Scheiben 8, 9 wiederum zwei verschiedenen Gruppen angehören. In Abwandlung der zuvor beschriebenen Ausführungsformen sind die Scheiben 8, 9 mit ihrer Drehachse 10 an einem abgekröpften Arm 25 gelagert, der wiederum die Scheibe mit der Schwenkachse 11 verbindet. Der abgekröpfte Arm 25 greift dabei an der gewölbten Außenseite der Scheibe 8, 9 an und die Scheibe ist, wie aus der Zeichnung erkennbar, mit Abstand von der Schwenkachse auf der Seite des Arms angeordnet. Die abgekröpften Arme 25 sind mit ihrer Schwenkachse 11 an einem einteiligen Rahmen 1 gelagert. Wie aus Figur 8 ersichtlich, werden zum Wenden die Scheiben 8 der einen Gruppe und die und die Scheiben 9 der anderen Gruppe aus ihrer Arbeitsstellung in Figur 7 in jeweils entgegengesetzter Richtung zu der einen bzw. anderen Seite des Rahmens 1 durch Verschwenken abgerückt, so daß sie die in Figur 8 gezeigte Zwischenstellung erreichen und aus dieser Stellung heraus durch weiteres Schwenken in dem entsprechenden Drehsinn in ihre andere Endlage gelangen. Die Scheiben 8 und 9 der beiden Gruppen können wiederum durch einen gemeinsamen Antrieb verbunden sein und sind in beiden Endstellungen verriegelbar.

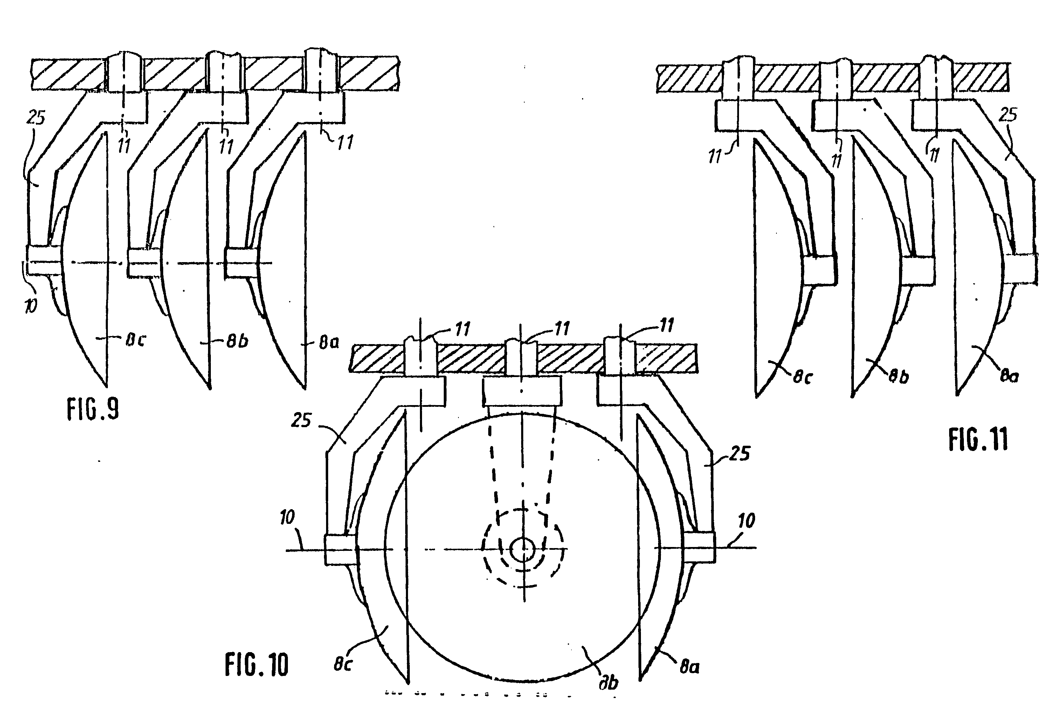

In den Figuren 9 bis 11 sind die Scheiben 8 wiederum über abgekröpfte Arme 25 an den Schwenkachsen 11 gelagert. Figur 9 zeigt die Scheiben 8 in der einen Endlage. Zum Wenden der Scheiben wird zunächst die außenliegende Scheibe 8a, die sich mit ihrer Wölbung nach außen öffnet, um ihre Schwenkachse 11 um 180° gedreht, wie dies in Figur 10 erkennbar ist, so daß sie von der Nachbarscheibe abgerückt ist. Mit zeitlicher Verzögerung, die so gewählt ist, daß keine Kollision stattfindet, wird die Scheibe 8b gewendet, wobei ihre Mittelposition in Figur 10 gezeigt ist. Dort ist insbesondere auch erkennbar, daß für das Drehen der Scheiben die Innenseite ihrer Wölbung sowie die Tatsache, daß die abgekröpften Arme außen an der Scheibe angreifen, ausgenutzt wird und somit das Wenden auch bei einem Abstand möglich ist, der kleiner ist als der Scheibenradius. Die Scheibe 8b gelangt schließlich gleichfalls in eine Parallellage zur Scheibe 8a. Daraufhin wird wiederum mit zeitlicher Verzögerung die Scheibe 8c gewendet, bis die Scheiben die in Figur 1 wiedergegebene andere Endlage erreicht haben.

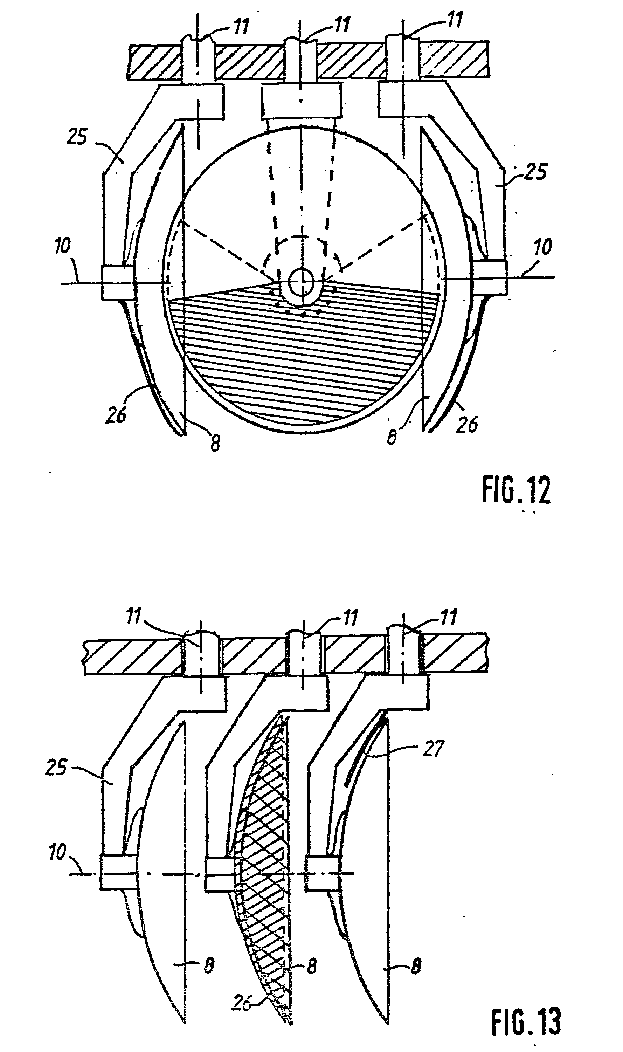

Figur 12 zeigt eine Ausführungsform, bei der jeder Scheibe 8 außenseitig ein Erdleitblech 26 zugeordnet ist. Die Figur 12 zeigt dabei die rechts liegende Scheibe in Seitenansicht, die mittlere Scheibe in einer Zwischenposition beim Wendevorgang. Das Erdleitblech 26 ist beim gezeigten Ausführungsbeispiel als Scheibensektor ausgebildet, der etwa einen Öffnungswinkel von 180° aufweist. Das Erdleitblech 26 ist bei diesem Ausführungsbeispiel der Außenkontur der Scheibe 8 angepaßt und an der Lagerung der Achse 10 ortsfest angebracht.

In Figur 13 ist demgegenüber ein Erdleitblech 26 gezeigt, das als Vollscheibe und wiederum konturengleich zur Arbeitsscheibe 8 ausgebildet ist. Es weist lediglich einen etwas geringeren Durchmesser auf. Wie bei dem Ausführungsbeispiel gemäß Figur 12 ist auch hier jeder Arbeitsscheibe 8 ein solches Erdleitblech 26 zugeordnet. Dieses Erdleitblech 26 kann zur Unterstützung seiner Funktion gegensinnig zur Scheibe 8 angetrieben sein, indem es beispielsweise mit der umlaufenden Drehachse der Scheibe 8 über ein Umkehrgetriebe, z. B. ein Planetengetriebe, verbunden ist. Das Erdleitblech 26 kann auch nur aus einem Stern gebildet sein, der dann zugleich Abstreiffunktion hat. Es kann ferner statt dessen oder zusätzlich ein Erdabstreifer 27 vorgesehen sein, der der Scheibe außenseitig anliegt.

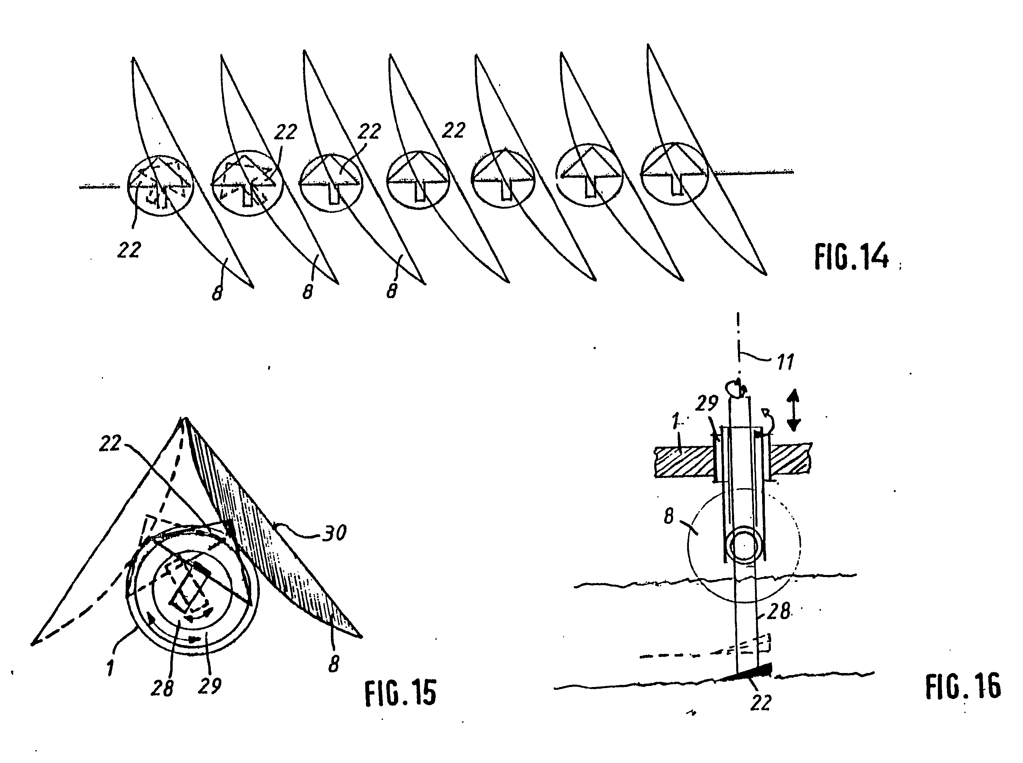

Mit Bezug auf Figur 6 sind bereits Tiefenlockerungswerkzeuge 22 beschrieben worden, die am Rahmen 1 des Gerätes vor den Scheiben angebracht sind. In Figur 14 sind solche Tiefenlockerungswerkzeuge 22 in Verbindung mit den Scheiben 8 in Draufsicht schematisch angedeutet. Sie weisen ein in der Regel scharartiges Werkzeug auf. Bei diesem Ausführungsbeispiel sind die Tiefenlockerungswerkzeuge 22 in der gleichen Vertikalebene angeordnet, wie die Scheiben 8. Dies hat den Vorteil, daß die in die Tiefe angestellten Tiefenlockerungswerkzeuge die Scheiben 8 nach unten ziehen, so daß ein Ausweichen der Scheiben nicht möglich ist. Die Tiefenlockerungswerkzeuge 22 sitzen am Rahmen 1, wie aus Figur 16 mit dem Doppelpfeil erkennbar, höhenverstellbar. Hierzu weisen sie einen Schaft 28 auf. Der Schaft 28 (Figur 15 und 16) sitzt bei dem gezeigten Ausführungsbeispiel ferner in einem Schwenklager 29, so daß das Tiefenlockerungswerkzeug 22 gegenüber der Fahrtrichtung angestellt werden kann, wie dies insbesondere in Figur 15 erkennbar ist. In bevorzugter Abwandlung gegenüber der Darstellung in Figur 14 und 15 sind die Tiefenlockerungswerkzeuge 22 so angeordnet, daß sie sich etwa unterhalb des unteren Schnittscheitels der Scheibe 8 befinden, der in Figur 15 mit 30 angedeutet ist.

Durch die drehbare Lagerung der Tiefenwerkzeuge lassen sich diese so gegen die Fahrtrichtung anstellen, daß sich die Seitenkräfte der Scheibe 8 und des Tiefenlockerungswerkzeugs 22 ausgleichen. Sie lassen sich ferner aufgrund der Schwenklagerung in gleicher Weise verdrehen, wie dies mit den Scheiben möglich ist und in Figur 15 mit den gestrichelten Linien wiedergegeben ist. Durch das Anstellen der Tiefenlockerungswerkzeuge kann auf die eingangs erwähnte Zugpunktverlagerung verzichtet werden. Auch ist ein Scheibensech vor jedem Tiefenlockerungswerkzeug, wie sonst üblich, entbehrlich, da diese Aufgabe von der Scheibe übernommen wird.

Die Anordnung der Tiefenlockerungswerkzeuge 22 unterhalb des unteren Schnittscheitels 30 der Scheibe 8 und die gleichzeitige Schwenklagerung der Tiefenlockerungswerkzeuge wird zweckmäßigerweise dadurch verwirklicht, daß die Tiefenlockerungswerkzeuge 22 an der gleichen Schwenkachse sitzen wie die Scheiben 8. Dies setzt in Abkehr von den Ausführungsformen gemäß Figur 7 bis 13 einen innenseitigen Angriff der Arme 25 an den Scheiben 8 voraus, wobei dann der Arm nicht abgekröpft sein muß und für das Schwenken der Scheiben in erster Linie das lineare Abrücken in Frage kommt.

## Patentansprüche

1. Bodenbearbeitungsgerät zum flachen Wenden des Bodens, bestehend aus einem Rahmen (1) und mehreren von diesem an etwa vertikalen Schwenkachsen (11) aufgenommenen, gewölbten Scheiben (8, 9), die quer zur Fahrtrichtung mit einem Abstand voneinander, der geringer ist als der Scheibendurchmesser, angeordnet, an jeweils etwa horizontalen Achsen (10) drehbar gelagert und unter einem Winkel zur Fahrtrichtung angestellt sind, dadurch gekennzeichnet, daß der Rahmen (1) etwa senkrecht zur Fahrtrichtung und die Scheiben (8, 9) fluchtend nebeneinander angeordnet sind und daß die Scheiben aus der Arbeitsstellung einzeln (8a, 8b, 8c) oder in Gruppen (8, 9) so weit voneinander abrückbar sind, daß sie behinderungsfrei um die vertikale Schwenkachse (11) um 180° schwenkbar sind und danach wieder in die andere Arbeitsstellung aufeinander zu bewegbar sind.

2. Bodenbearbeitungsgerät nach Anspruch 1, dadurch gekennzeichnet, daß die Scheiben (8) durch eine lineare Bewegung voneinander abrückbar sind.

3. Bodenbearbeitungsgerät nach Anspruch 1, dadurch gekennzeichnet, daß die Scheiben (8, 9; 8a, 8b, 8c) durch eine Drehbewegung voneinander abrückbar sind.

4. Bodenbearbeitungsgerät nach Anspruch 1 oder 3, dadurch gekennzeichnet, daß die Scheiben (8, 9) durch eine gegensinnige Drehbewegung um die Schwenkachse (11) in einer Horizontalebene voneinander abrückbar sind.

5. Bodenbearbeitungsgerät nach Anspruch 1 oder 3, dadurch gekennzeichnet, daß die Scheiben (8, 9) dadurch voneinander abrückbar sind, daß sie um eine quer zur Fahrtrichtung verlaufende horizontale Achse (16) in einer Vertikalebene schwenkbar sind.

6. Bodenbearbeitungsgerät nach einem der Ansprüche 1 bis 5, wobei die Scheiben mit ihrer etwa horizontalen Drehachse an ihrer gewölbten Außenseite gelagert sind, dadurch gekennzeichnet, daß das Drehlager (10) der Scheiben (8, 9) über einen abgekröpften Arm (25) mit der etwa vertikalen Schwenkachse (11) verbunden ist.

7. Bodenbearbeitungsgerät nach Anspruch 6, dadurch gekennzeichnet, daß die Scheiben (8, 9 ; 8a, 8b, 8c) mit Abstand von der Schwenkachse (11) auf der Seite des abgekröpften Arms (25) angeordnet sind.

8. Bodenbearbeitungsgerät nach Anspruch 7, dadurch gekennzeichnet, daß die Scheiben (8) mit zeitlicher Verzögerung nacheinander, beginnend mit der am weitesten außen liegenden und mit ihrer Wölbung nach außen offenen Scheibe (8a) um ihre Schwenkachse (11) schwenkbar sind.

9. Bodenbearbeitungsgerät nach einem der Ansprüche 1 bis 8, dadurch gekennzeichnet, daß die Scheiben (8, 9) in wenigstens zwei Gruppen aufgeteilt und abwechselnd der einen und der anderen Gruppe zugeordnet sind.

10. Bodenbearbeitungsgerät nach einem der Ansprüche 1 bis 9, dadurch gekennzeichnet, daß die Scheiben (8, 9) um die Schwenkachse (11) zunächst in eine zur Fahrtrichtung parallele Lage schwenkbar, anschliessend gruppenweise abrückbar und schließlich in ihre andere Endlage schwenkbar sind.

11. Bodenbearbeitungsgerät nach einem der Ansprüche 1 bis 10, dadurch gekennzeichnet, daß der Rahmen (1) entsprechend der Anzahl der Scheibengruppen quer zur Fahrtrichtung längsgeteilt, der eine Rahmenteil mit der einen Scheibengruppe (8) ortsfest angeordnet und die anderen Rahmenteile (6) mit den anderen Scheibengruppen (9) um die am ersten Rahmenteil (5) vorgesehene horizontale Achse (16) schwenkbar sind.

12. Bodenbearbeitungsgerät nach einem der Ansprüche 1 bis 10, dadurch gekennzeichnet, daß der Rahmen (1) quer zur Fahrtrichtung längsgeteilt und das eine Rahmenteil (6) mit der einen Scheibengruppe (9) von dem anderen Rahmenteil (5) mit der anderen Scheibengruppe (8) im wesentlichen horizontal abrückbar ist.

13. Bodenbearbeitungsgerät nach einem der Ansprüche 1 bis 10, dadurch gekennzeichnet, daß der Rahmen (1) zweifach längsgeteilt ist, das mittlere Rahmenteil (13) mit der einen Scheibengruppe starr angeordnet ist und die beiden äußeren Rahmenteile (12, 14) mit den anderen Scheibengruppen in entgegengesetzten Richtungen horizontal abrückbar sind.

14. Bodenbearbeitungsgerät nach einem der Ansprüche 1 bis 11, dadurch gekennzeichnet, daß die Ebene der Scheiben (8, 9, 15), insbesondere ihre Schwenkachse, entgegen der Fahrtrichtung geneigt ist.

15. Bodenbearbeitungsgerät nach einem der Ansprüche 1 bis 4, dadurch gekennzeichnet, daß mittels der Schwenkbarkeit der Scheiben (8, 9) um die Schwenkachse (11) zugleich verschiedene Anstellwinkel der Scheiben gegenüber der Fahrtrichtung einstellbar sind.

16. Bodenbearbeitungsgerät nach einem der Ansprüche 1 bis 15, dadurch gekennzeichnet, daß die Scheiben (8, 9, 15) jeder Gruppe mittels eines sie verbindenden Endlostriebs um die zu ihrer Drehachse (10) etwa senkrechte Schwenkachse (11) schwenkbar sind.

17. Bodenbearbeitungsgerät nach einem der Ansprüche 1 bis 16, mit einem Erdabstreifer für jede Scheibe, dadurch gekennzeichnet, daß wenigstens ein Erdabstreifer (27) an der Außenseite der Scheibe (8) angeordnet ist.

18. Bodenbearbeitungsgerät nach einem der Ansprüche 1 bis 17, dadurch gekennzeichnet, daß wenigstens ein Erdleitblech (26) zumindest im Arbeitsbereich der Scheibe (8) an deren Außenseite mit geringem Abstand von dieser angeordnet ist.

19. Bodenbearbeitungsgerät nach Anspruch 17 oder 18, dadurch gekennzeichnet, daß der Erdabstreifer (27) und/oder das Erdleitblech (26) der Außenkontur der Scheibe (8) angepaßt ist.

20. Bodenbearbeitungsgerät nach einem der Ansprüche 17 bis 19, dadurch gekennzeichnet, daß der Erdabstreifer (27) und/oder das Erdleitblech (26) aus ein oder mehr Scheibensektoren gebildet ist.

21. Bodenbearbeitungsgerät nach einem der Ansprüche 17 bis 19, dadurch gekennzeichnet, daß das Erdleitblech (26) als der Scheibe (8) konturengleiche Leitscheibe (26) mit etwas geringerem Durchmesser ausgebildet ist.

22. Bodenbearbeitungsgerät nach Anspruch 21, dadurch gekennzeichnet, daß die Leitscheibe (26) gegensinnig zur Scheibe antreibbar ist.

23. Bodenbearbeitungsgerät nach Anspruch 22, dadurch gekennzeichnet, daß die Leitscheibe (26) mit der Drehachse (10) der Scheibe (8) antriebsmäßig, z. B. über ein Umkehrgetriebe, verbunden ist.

24. Bodenbearbeitungsgerät nach einem der Ansprüche 1 bis 23, dadurch gekennzeichnet, daß neben den Scheiben (8, 9) Tiefenlockerungswerkzeuge (22) vorgesehen sind.

25. Bodenbearbeitungsgerät nach Anspruch 24, dadurch gekennzeichnet, daß die Tiefenlockerungswerkzeuge (22) etwa in der gleichen Vertikalebene, in der die Scheiben (8) liegen, angeordnet sind.

26. Bodenbearbeitungsgerät nach Anspruch 4 oder 5, dadurch gekennzeichnet, daß die Tiefenlockerungswerkzeuge (22) einen Schaft (28) aufweisen, mittels dessen sie höhenverstellbar und zugleich um eine vertikale Achse schwenkbar sind.

27. Bodenbearbeitungsgerät nach einem der Ansprüche 1 bis 26, dadurch gekennzeichnet, daß zwischen dem Rahmen (1) und seiner fahrzeugseitigen Anhängung bzw. Aufsattelung eine den Zugpunkt (3) verlagernde Stelleinrichtung (24) vorhanden ist.

## Claims

1. Agricultural implement for the flat turning over of the soil, comprising a frame (1) and several convex disks (8, 9) received by the same on approximately vertical pivot pins (11) and which are arranged at right angles to the direction of travel with a spacing smaller than the disk diameter, being mounted in rotary manner on approximately horizontal shafts (10) and set at an angle to the direction of travel, characterized in that the frame (1) is approximately at right angles to the direction of travel and the disks (8, 9) are juxtaposed in aligned manner, the disks being individually (8a, 8b, 8c) or in groups (8, 9) movable away from one another out of the working position to such an extent that they are pivotable in impediment-free manner about the vertical pivot pin (11) by 180° and can then be moved towards one another again in the other working position.

2. Agricultural implement according to claim 1, characterized in that the disks (8) can be moved away from one another by a linear movement.

3. Agricultural implement according to claim 1, characterized in that the disks (8, 9 ; 8a, 8b, 8c) can be moved away from one another by a rotary movement.

4. Agricultural implement according to claims 1 or 3, characterized in that the disks (8, 9) can be moved away from one another by a oppositely directed rotary movement about pivot pin (11) in a horizontal plane.

5. Agricultural implement according to claims 1 or 3, characterized in that the disks (8, 9) can be moved away from one another in that they are pivotable in a vertical plane about a horizontal axis (16) at right angles to the direction of travel.

6. Agricultural implement according to one of the claims 1 to 5, in which the disks with their roughly horizontal rotation axis are mounted on the convex outside thereof, characterized in that the pivot bearing (10) of disks (8, 9) is connected by means of an offset arm (25) to the approximately vertical pivot pin (11).

7. Agricultural implement according to claim 6, characterized in that the disks (8, 9 ; 8a, 8b, 8c) are arranged on the side of the offset arm (25) at a distance from the pivot pin (11).

8. Agricultural implement according to claim 9, characterized in that the disks (8) are successively pivotable about pivot pin (11) with a time lag, starting with the furthest outwards disk (8a) open with its curvature to the outside.

9. Agricultural implement according to one of the claims 1 to 8, characterized in that the disks (8, 9) are subdivided into at least two groups and are alternately associated with one or other group.

10. Agricultural implement according to one of the claims 1 to 9, characterized in that the disks (8, 9) are firstly pivotable about the pivot pin (11) into a position parallel to the direction of travel and are then movable away groupwise and are finally pivotable into the other end position thereof.

11. Agricultural implement according to one of the claims 1 to 10, characterized in that the frame (1) is longitudinally split at right angles to the direction of travel corresponding to the number of disk groups, one frame part with one disk group (8) is arranged in fixed manner and the other frame parts (6) with the other disk groups (9) are pivotable about the horizontal axis (16) provided on the first frame part (5).

12. Agricultural implement according to one of the claims 1 to 10, characterized in that the frame (1) is longitudinally split at right angles to the direction of travel and one frame part (6) with one disk group (9) can be moved substantially horizontally away from the other frame part (5) with the other disk group (8).

13. Agricultural implement according to one of the claims 1 to 10, characterized in that the frame (1) is doubly longitudinally split, the middle frame part (13) with one disk group being rigidly positioned and the two outer frame parts (12, 14) with the other disk groups can be horizontally moved away in opposite directions.

14. Agricultural implement according to one of the claims 1 to 11, characterized in that the plane of the disk (8, 9, 15) and in particular the pivot pin thereof, is inclined counter to the direction of travel.

15. Agricultural implement according to one of the claims 1 to 4, characterized in that different setting angles of the disks with respect to the direction of travel can be set by means of the pivotability of disks (8, 9) about pivot pin (11).

16. Agricultural implement according to one of the claims 1 to 15, characterized in that the disks (8, 9, 15) of each group are pivotable by means of a continuous drive connecting the same about the pivot pin (11) which is approximately perpendicular to its pivot bearing (10).

17. Agricultural implement according to one of the claims 1 to 16 with a soil scraper for each disk, characterized in that at least one soil scraper (27) is arranged on the outside of disk (8).

18. Agricultural implement according to one of the claims 1 to 17, characterized in that at least one soil deflector plate (26) is provided at least in the working area of the outside of disk (8) and at a limited distance therefrom.

19. Agricultural implement according to claims 17 or 18, characterized in that the soil scraper (27) and/or the soil deflector plate (26) is adapted to the outer contour of disk (8).

20. Agricultural implement according to one of the claims 17 to 19, characterized in that the soil scraper (27) and/or the soil deflector plate (26) is formed from one or more disk sectors.

21. Agricultural implement according to one of the claims 17 to 19, characterized in that the soil deflector plate (26) is constructed with the same contours as disk (8) and with a somewhat smaller diameter.

22. Agricultural implement according to claim 21, characterized in that the deflector plate (26) can be driven in the opposite direction to the disk.

23. Agricultural implement according to claim 22, characterized in that the deflector plate (26) is connected to the pivot shaft (10) of disk (8) from the drive standpoint, e. g. via a reversing gear.

24. Agricultural implement according to one of the claims 1 to 23, characterized in that depth loosening implements (22) are located alongside disks (8, 9).

25. Agricultural implement according to claim 24, characterized in that the depth loosening implements (22) are located roughly in the same vertical plane as that in which the disks (8) are located.

26. Agricultural implement according to claims 24 or 25, characterized in that the depth loosening implements (22) have a shaft (29) by means of which they are vertically adjustable and also pivotable about a vertical axis.

27. Agricultural implement according to one of the claims 1 to 26, characterized in that an adjusting device (24) displacing the pulling point (3) is provided between frame (1) and its vehicle-side attachment or pivot point.

**Revendications**

1. Outil pour le travail du sol pour le retournement du sol à faible profondeur, composé d'un châssis (1) et, monté sur ledit châssis par l'intermédiaire d'axes de pivotement (11) à peu près verticaux, d'une pluralité de disques (8, 9) cintrés qui sont disposés transversalement à la direction de la marche à des intervalles inférieurs au diamètre des disques, et montés respectivement de manière tournante sur des axes (10) à peu près horizontaux, de façon à former un angle avec la direction de la marche, caractérisé en ce que le châssis (1) est orienté à peu près perpendiculairement à la direction de la marche, que les disques (8, 9) sont juxtaposés en alignement, et que, à partir de la position de travail, les disques peuvent être écartés individuellement (8a, 8b, 8c) ou en groupes (8, 9) les uns des autres de telle façon qu'ils peuvent être pivotés sans gêne de 180° autour de l'axe de pivotement vertical (11), puis rapprochés les uns des autres dans l'autre position de travail.

2. Outil pour le travail du sol selon la revendication 1, caractérisé en ce que les disques (8) peuvent être écartés les uns des autres par un mouvement linéaire.

3. Outil pour le travail du sol selon la revendication 1, caractérisé en ce que les disques (8, 9 ; 8a, 8b, 8c) peuvent être écartés les uns des autres par un mouvement de rotation.

4. Outil pour le travail du sol selon l'une des revendications 1 ou 3, caractérisé en ce que les disques (8, 9) peuvent être écartés les uns des autres dans un plan horizontal par un mouvement de rotation en sens opposé autour de l'axe de pivotement (11).

5. Outil pour le travail du sol selon l'une des revendications 1 ou 3, caractérisé en ce que les disques (8, 9) peuvent être écartés les uns des autres par le fait qu'ils peuvent pivoter dans un plan vertical autour d'un axe horizontal (16) s'étendant transversalement à la direction de la marche.

6. Outil pour le travail du sol selon l'une des revendications 1 à 5, dans lequel les disques sont montés avec leur axe de rotation sensiblement horizontal sur leur face extérieure cintrée, caractérisé en ce que le coussinet de pivotement (10) des disques (8, 9) est rattaché à l'axe de pivotement (11) sensiblement vertical par l'intermédiaire d'un bras (25) coudé.

7. Outil pour le travail du sol selon la revendication 6, caractérisé en ce que les disques (8, 9 ; 8a, 8b, 8c) sont disposés à distance de l'axe de pivotement (11) sur le côté du bras (25) coudé.

8. Outil pour le travail du sol selon la revendication 7, caractérisé en ce que les disques (8) peuvent être pivotés successivement, avec un décalage dans le temps, autour de leur axe de pivotement (11) en commençant par le disque (8a) situé le plus à l'extérieur et dont la courbure est ouverte vers l'extérieur.

9. Outil pour le travail du sol selon l'une des revendications 1 à 8, caractérisé en ce que les disques (8, 9) sont divisés en au moins deux groupes et associés alternativement à l'un et l'autre groupe.

10. Outil pour le travail du sol selon l'une des revendications 1 à 9, caractérisé en ce que les disques (8, 9) peuvent tout d'abord être tournés autour de l'axe de pivotement (11), dans une position parallèle à la direction de la marche, puis écartés par groupes et enfin pivotés dans leur autre position de fin de course.

11. Outil pour le travail du sol selon l'une des revendications 1 à 10, caractérisé en ce que le châssis (1) est divisé en longueur, transversalement à la direction de la marche, conformément au nombre des groupes de disques, que l'une des parties du châssis avec le groupe de disque (8) est montée de manière fixe et que les autres parties du châssis (6) avec les autres groupes de disques (9) peuvent pivoter autour de l'axe horizontal (16) prévu sur la première partie de châssis (5).

12. Outil pour le travail du sol selon l'une des revendications 1 à 10, caractérisé en ce que le châssis (1) est divisé en longueur, transversalement à la direction de la marche, et que l'une des parties du châssis (6) avec l'un des groupes de disques (9) peut être écartée sensiblement horizontalement de l'autre partie du châssis (5) avec l'autre groupe de disques (8).

13. Outil pour le travail du sol selon l'une des revendications 1 à 10, caractérisé en ce que le châssis (1) est doublement divisé en longueur, que la partie médiane (13) du châssis est disposée de manière rigide avec l'un des groupes de disque et que les deux parties de châssis extérieures (12, 14) avec les autres groupes de disques peuvent être écartées horizontalement dans des directions opposées.

14. Outil pour le travail du sol selon l'une des revendications 1 à 11, caractérisé en ce que le plan des disques (8, 9, 15), en particulier leur axe de pivotement, est incliné dans le sens opposé à la direction de la marche.

15. Outil pour le travail du sol selon l'une des revendications 1 à 4, caractérisé en ce que l'orientabilité des disques (8, 9) autour de l'axe de pivotement (11) permet en même temps de régler différents angles d'inclinaison des disques par rapport à la direction de la marche.

16. Outil pour le travail du sol selon l'une des revendications 1 à 15, caractérisé en ce que les disques (8, 9, 15) de chaque groupe peuvent être pivotés, au moyen d'un mouvement sans fin qui les relient, autour de l'axe de pivotement (11) orienté à peu près perpendiculairement à leur axe de rotation (10).

17. Outil pour le travail du sol selon l'une des revendications 1 à 16, avec un racleur de terre pour chaque disque, caractérisé en ce qu'au moins un racleur de terre (27) est disposé à la face extérieure du disque (8).

18. Outil pour le travail du sol selon l'une des revendications 1 à 17, caractérisé en ce qu'au moins un déflecteur de terre (26) est disposé au moins dans la zone de travail du disque (8), à la face extérieure et à faible distance de celui-ci.

19. Outil pour le travail du sol selon l'une des revendications 17 ou 18, caractérisé en ce que le racleur de terre (27) et/ou le déflecteur de terre (26) sont adaptés au contour extérieur du disque (8).

20. Outil pour le travail du sol selon l'une des revendications 17 à 19, caractérisé en ce que le racleur de terre (27) et/ou le déflecteur de terre (26) sont constitués par un ou plusieurs secteurs de disque.

21. Outil pour le travail du sol selon l'une des revendications 17 à 19, caractérisé en ce que le déflecteur de terre (26) est réalisé sous la forme d'un disque directeur (26) ayant le même contour que le disque (8) avec un diamètre légèrement inférieur.

22. Outil pour le travail du sol selon la revendication 21, caractérisé en ce que le disque directeur (26) peut être entraîné en sens inverse par rapport au disque.

23. Outil pour le travail du sol selon la revendication 22, caractérisé en ce que le disque directeur (26) est couplé en entraînement avec l'axe de rotation (10) du disque (8), par exemple par l'intermédiaire d'un mécanisme de renversement.

24. Outil pour le travail du sol selon l'une des revendications 1 à 23, caractérisé en ce que des outils pour l'ameublissement profond (22) sont prévus à côté des disques (8, 9).

25. Outil pour le travail du sol selon la revendication 24, caractérisé en ce que les outils pour l'ameublissement profond (22) sont disposés à peu près dans le même plan vertical que les disques (8).

26. Outil pour le travail du sol selon l'une des revendications 4 ou 5, caractérisé en ce que les outils pour l'ameublissement profond (22) comportent une tige (28) à l'aide de laquelle ils peuvent être réglés en hauteur et pivotés en même temps autour d'un axe vertical.

27. Outil pour le travail du sol selon l'une des revendications 1 à 26, caractérisé en ce qu'entre le châssis (1) et son attelage et respectivement son pivot d'accouplement du côté véhicule est disposé un système de réglage (24) permettant de déplacer le point de traction (3).

**FIG. 1**

**FIG. 2**

EP 0 199 313 B1

FIG. 3

FIG. 4

FIG. 5

FIG. 6

EP 0 199 313 B1

FIG.7

FIG. 8

FIG.11

FIG.10

FIG.9

FIG.12

FIG.13

FIG.14

FIG.15

FIG.16